# EUROPÄISCHE PATENTSCHRIFT

(11) **EP 0 867 062 B1**
(45) Veröffentlichungstag und Bekanntmachung des Hinweises auf die Patenterteilung: **11.08.1999**
(21) Anmeldenummer: 96945902.3
(22) Anmeldetag: 29.11.1996
(51) Int. Cl.: H02J 7/00

(54) **UNTERBRECHUNGSFREIE STROMVERSORGUNGSEINRICHTUNG**
NO-BREAK POWER SUPPLY
DISPOSITIF D'ALIMENTATION ELECTRIQUE SANS INTERRUPTION

(30) Priorität: 12.12.1995 DE 19546420
(43) Veröffentlichungstag der Anmeldung: 30.09.1998
(73) Patentinhaber: SIEMENS AKTIENGESELLSCHAFT, 80333 München (DE)
(72) Erfinder: BOLDIN, Detlef, D-91090 Effeltrich (DE); BÜTTNER, Karl-Heinz, D-91058 Erlangen (DE); HÜMPFNER, Roland, D-91074 Herzogenaurach (DE); FLEISCH, Karl, D-91054 Erlangen (DE)
(86) Internationale Anmeldenummer: DE9602291
(87) Internationale Veröffentlichungsnummer: WO9722170

(56) Entgegenhaltungen:
- EP-A- 0 398 722
- WO-A-94/09545

## Beschreibung

Die Erfindung bezieht sich auf eine unterbrechungsfreie Stromversorgungseinrichtung gemaß dem Oberbegriff des Anspruchs 1.

Eine derartige unterbrechungsfreie Stromversorgungseinrichtung ist im Handel erhältlich und beispielsweise im Siemens-Prospekt "Statische unterbrechungsfreie Stromversorgungen" mit dem Titel "USV Reihe 42 Leistungsbereich 10 bis 500 kVA". Bestell-Nr. E20001-P161-A4, näher beschrieben.

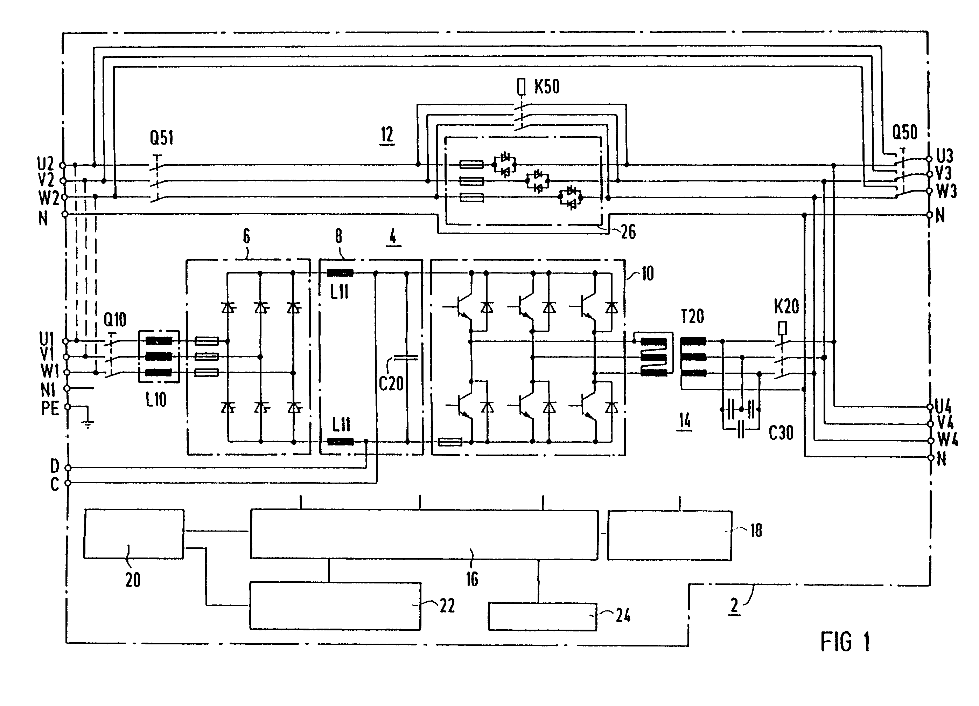

Die Figur 1 zeigt einen vereinfachten Übersichtsschaltplan einer derartigen unterbrechungsfreien Stromversorgungseinrichtung 2 (USV-Einrichtung). Diese USV-Einrichtung 2 besteht aus einem Spannungszwischenkreis-Umrichter 4, der aus den Komponenten Gleichrichter 6, Spannungszwischenkreis 8 und Wechselrichter 10 besteht. Außerdem weist die USV-Einrichtung 2 noch folgende Komponenten auf: Netzkommutierungsdrossel L10, Netzrückschalteinrichtung 12, Ausgangsfilter 14, Steuereinrichtung 16 für den Umrichter 4, Steuereinrichtung 18 für die Netzrückschalteinrichtung 12, Gleichrichter-Eingangsschalter Q10, Handumgehungsschalter Q50, Netzrückschalteinrichtungs-Schalter Q51, Gleichspannungsschienen-Anschlüsse C und D, Netzanschlüsse U1, V1, W1 des Gleichrichters 6, Netzanschlüsse U2, V2, W2, N der Netzrückschalteinrichtung 12, Anschlüsse U3, V3, W3, N für einen Verbraucher, Anschlüsse U4, V4, W4, N für einen Parallelblock, ein Bedienfeld 20, ein Überwachungs- und Diagnosesystem 22 und eine Fernsignalisierung 24.

Als Gleichrichter 6 ist eine vollgesteuerte Thyristor-Drehstrombrücke (6-pulsig) vorgesehen. Wahlweise kann auch eine 12-pulsige Drehstrombrücke für den Gleichrichter 6 vorgesehen werden, um die Netzrückwirkung deutlich vermindern zu können. Bei einer Leistung von 500 kVA werden die USV-Einrichtungen stets 12-pulsig ausgeführt. Bei der 12-pulsigen Ausführungsform des Gleichrichters 6 werden zwei vorgesteuerte 6-pulsige Drehstrombrücken, die mit Hilfe eines Transformators um 30° elektrisch versetzt arbeiten, verwendet. Die Steuerung und Regelung des Gleichrichters 6, die in der Umrichter-Steuerung 16 implementiert ist, enthält folgende Funktionen:
- Softwaregesteuerte, batterieschonende Ladeautomatik mit IU-Kennlinie und Ladestrombegrenzung
- Strombegrenzung zur Verhinderung der Überlastung des Gleichrichters
- Reduzierte Strombegrenzung und geneigte Spannungskennlinie bei Betrieb an einer Netzersatzanlage
- Geregelter Hochlauf: Langsamer Spannungs- und Stromanstieg, keine Einschaltstromstöße
- Geregelte Stromaufteilung bei Parallelbetrieb von zwei Gleichrichtern zur Verhinderung ungleichmäßiger Beanspruchung
- Gestaffelter Hochlauf der Gleichrichter bei Mehrblockanlagen.

Der Spannungszwischenkreis 8 ist als Filterkreis aufgebaut. Dieser Filterkreis besteht aus zwei Drosseln L11 und einem Kondensator C20. Die beiden Drosseln L11 sind jeweils in einer Gleichspannungsschiene integriert. Dieser Filterkreis reduziert die natürliche Welligkeit der Gleichspannung und eliminiert eventuelle Spannungsspitzen. Die Zwischenkreisspannung wird geglättet und die Welligkeit des Batteriestromes wird sehr klein. Dies schont die Batterie. Das "USV-Prinzip" beruht darauf, daß die Zwischenkreisspannung entweder vom Netz oder - bei dessen Ausfall - von der Batterie in einem Bereich gehalten wird, der es dem Wechselrichter ermöglicht, die Ausgangsspannung konstant zu halten.

Der Wechselrichter 10 besteht aus einer Transistor-Brückenschaltung, der ausgangsseitig der Ausgangsfilter 14 nachgeschaltet ist. Dieser Ausgangsfilter 14 besteht aus einem Transformator T20, der eine große Streuinduktivität aufweist, und Filterkondensatoren C30. Die Streuinduktivitäten des Transformators T20 bilden zusammen mit den Filterkondensatoren C30 den dreiphasigen Ausgangsfilter 14, der aus der pulsbreitenmodulierten Wechselrichter-Ausgangsspannung die Grundschwingung herausfiltert und damit eine sinusförmige Ausgangsspannung mit niedrigem Klirrfaktor erzeugt. Die Ausgangsspannung wird geregelt durch Ansteuern der Wechselrichterphasen nach dem Verfahren der Pulsbreitenmodulation (PWM) mit Supersinus. Wegen der hohen Pulsfrequenz kann die Regelung sehr schnell eingreifen (Augenblickswertregelung). Weil damit die Kurvenform der Ausgangsspannung aktiv beeinflußt wird, werden auch die Rückwirkungen von Verbrauchern mit nicht sinusförmigen Strömen (nichtlineare Last) kompensiert. Diese Steuerung und Regelung des Wechselrichters 10, die in der Umrichter-Steuerung 16 implementiert ist, enthält folgende Funktionen:
- Spannungsregelung mit hoher Dynamik
- Strombegrenzung
- Frequenzregelung
- Winkelregelung: Exakte Synchronisation mit dem Netz sowie mit parallelen USV-Blöcken, dadurch keine Ausgleichsströme und keine Stromstöße bei Umschaltvorgängen
- Augenblickswertregelung: Geringer Klirrfaktor der Ausgangsspannung, auch bei nichtlinearer Last, hohe Spitzenströme, aktive Beeinflussung der Kurvenform, hohe Dynamik
- Impulsbildung: Schaltzustand der Leistungstransistoren wird ständig überwacht, keine Fehlimpulse möglich, optimale Ausnutzung des Leistungsteiles in Grenzsituationen.

Die Netzrückschalteinrichtung 12 besteht aus einem dreiphasigen Thyristorschalter 26, einem Schutz K50 und einer Steuereinrichtung 18. Der dreiphasige Thyristorschalter 26 kann den Laststrom unverzögert übernehmen. Nach einer vorbestimmten Zeitspanne übernimmt dann das Schutz K50 den Dauerstrom. Die Netzrückschalteinrichtung 12 schaltet unterbrechungsfrei in folgenden Fällen:
- Überlastung des Wechselrichters 10
- Kurzschluß
- Wechselrichterstorung
- Bei Abschaltung des Wechselrichters 10 von Hand.

Die Elektronikkomponenten für Steuerung, Regelung, Schutz, Überwachung, Anzeige und Bedienung sind steckbar in einem Baugruppenträger und auf funktions- oder komponentenbezogenen peripheren Baugruppen untergebracht. Dieses Elektronikteil ist weitgehend digitalisiert mit Mikroprozessoren und Mikrocontrollern, wobei SMD-, Multilayer und Hybridtechnik verwendet wird.

In die für die Gerätefunktion notwendigen Baugruppen ist ein unabhängiges Überwachungs- und Diagnosesystem 22 eingebaut. Über das Display des Bedienfeldes 20 liefert es ausführliche Informationen über den Gerätezustand und hilft bei der Fehlerdiagnose. Das System 22 hält aufbereitete aktuelle Meßwerte abrufbereit, prognostiziert die voraussichtlich verfügbare Batterieüberbrückungszeit nach dem Kennlinienverfahren, liefert statistische Daten, speichert ständig analoge und digitale Werte, hält die Vorgänge vor und nach einer Störung fest, erfaßt Fehler und hilft bei der Diagnose.

Das Überwachungs- und Diagnosesystem 22 enthält einen batteriegepufferten Prozeßsignalspeicher, der ständig zahlreiche Signalzustände aus dem USV-Gerbt erfaßt. Bei einem Störfall läuft der Speichervorgang noch einige Zyklen weiter, so daß Vor- und Nachgeschichte der Störung festgehalten werden. Die gespeicherten Betriebsgrößen können anschließend abgelesen werden.

Das Display des Bedienfeldes 20 bietet:
- Anzeige des Block- und Anlagenzustandes
- Anwahl eines automatischen Batterietests
- Anzeige weiterer aktueller Meßwerte und daraus abgeleiteter Größen.

Gleichrichter- und Netzrückschalteinrichtung-Eingang der USV-Einrichtung 2 sind mit Funktentstörkondensatoren gegen Erde und mit Varistoren (Überspannungsbegrenzer) zwischen Phasen und Nulleitern N geschaltet. Zusammen mit dem LC-Filter im Spannungszwischenkreis 8 schützt dies die Einrichtung vor Netzüberspannung.

Wie man diesem vereinfachten Übersichtsschaltplan der bekannten USV-Einrichtung 2 entnehmen kann, sind die Komponenten Gleichrichter 6, Spannungszwischenkreis 8 und Wechselrichter 10 einzeln aufgebaut und in der Einrichtung 2 räumlich getrennt angeordnet (unterbrochene Linien). Diese Komponenten sind speziell für den Anwendungsfall bei USV-Einrichtungen 2 entwickelt. Dies trifft auch für das Ausgangsfilter 14 zu, wobei der Transformator T20 eine Sonderanfertigung ist, da er sowohl zur Spannungsumsetzung als auch zur Filterung verwendet wird. Bei einer Neuentwicklung einer USV-Einrichtung 2 müssen diese Komponenten weitgehend neu entwickelt werden.

Im Handel sind Spannungszwischenkreis-Umrichter für Drehzahlveränderbare Antriebe erhältlich (Siemens-Prospekt "SIMOVERT MASTER DRIVES", Bestell-Nr. E20002-K4065-A111-A1). Diese Frequenzumrichter der Antriebstechnik sind als Kompaktgeräte oder Einbaugeräte erhältlich. Die Kompaktgeräte sind in einem platzsparenden "BOOKSIZE"-Format ausgeführt. Die Montage erfolgt einfach durch das Einhängen dieser Kompaktgeräte in eine Standard-G-Schiene sowie durch eine zentrale Schraubbefestigung an der Geräteunterseite. Die Kompakt- und Einbaugeräte können ohne Zwischenabstände zueinander montiert werden. Dies reduziert die benötigte Schaltschrankfläche. Die Geräte-Reihe ist in einer durchgängigen Anschlußtechnik ausgeführt. Die Netz- und Gleichspannungs-Anschlüsse sind oben und die Motoranschlüsse generell unten. Die neue Gerätegeneration SIMOVERT MASTER DRIVES besteht aus einem modularen System leistungsfähiger Komponenten. Die Komponenten sind für jeden Anwendungsfall individuell einsetzbar. Bei der konstruktiven Gestaltung der Geräte haben leichte Handhabung, einfache Montage, leichte Verdrahtung und große Gleichteiligkeit im Vordergrund gestanden. Dies zeigt sich in standardisierten Gehäusen, Befestigung, Anschlußebene, Anbindung von Signal- und Busleitungen.

Die Komponenten sind unterteilt in netzseitige Systemkomponenten und lastseitige Systemkomponenten. Zu den netzseitigen Systemkomponenten gehört die Netzkommutierungsdrossel und der Netzfilter. Die Netzkommutierungsdrossel wird zur Begrenzung der Netzoberschwingungen eingesetzt. Die Netzkommutierungsdrossel reduziert durch ihre Induktivität die harmonischen Oberschwingungsströme der Umrichter und Einspeise- sowie Ein-/Rückspeiseeinheiten. Die Wirkung der Drossel ist vom Verhältnis der Netzkurzschlußleistung zu Antriebsscheinleistung abhängig. Der Netzfilter reduziert die auftretenden Funkstörspannungen der Umrichter, Einspeise- und Ein-/Rückspeiseeinheiten auf die Grenzwerte für öffentliche Netze.

Zu den lastseitigen Systemkomponenten gehört die Ausgangsdrossel und ein Sinusfilter. Die Ausgangsdrosseln sind zur Kompensation der aktiven Umladeströme bei langen Leitungen einzusetzen. Es können Eisendrosseln oder Ferritdrosseln verwendet werden. Der Sinusfilter erzeugt aus den pulsbreitenmodulierten Ausgangssignalen des Wechselrichters jeweils eine sinusförmige Spannung, die einen geringen Klirrfaktor aufweist.

Der Erfindung liegt nun die Aufgabe zugrunde, eine unterbrechungsfreie Stromversorgungseinrichtung anzugeben, bei der der Entwicklungsaufwand des Leistungsteils zu minimieren ist und bestehende Synergien genutzt werden.

Diese Aufgabe wird erfindungsgemäß gelöst mit den Merkmalen des Anspruchs 1.

Dadurch, daß als Spannungszwischenkreis-Umrichter der unterbrechungsfreien Stromversorgungseinrichtung ein im Handel erhältliches Frequenzumrichter-Gerät der Antriebstechnik verwendet wird, kann der Entwicklungsaufwand für den Leistungsteil der USV-Einrichtung minimiert werden. Außerdem wird ein geprüftes und technisch abgenommenes Gerät als Leistungsteil der USV-Einrichtung verwendet, so daß die neue USV-Einrichtung durch Hinzufügen von bekannten Komponenten entsteht. Da durch die Verwendung des bekannten Frequenzumrichter-Gerätes die Zwischenkreisspannung im Hinblick auf die Batterie nur unzureichend geglättet wird, wird diese Batterie mittels einer Batterieankoppelvorrichtung an den Anschlüssen des Spannungszwischenkreises angeschlossen. Durch die Verwendung des Frequenzumrichter-Gerätes und der Batterieankoppelvorrichtung können diese Komponenten der USV-Einrichtung beliebig in der Einrichtung plaziert werden, so daß die Baugröße dieser USV-Einrichtung sich vermindert.

Die Steuerung und Regelung des Frequenzumrichter-Gerätes kann weitgehend übernommen werden, da eine Konstantspannung und -frequenz ein Spezialfall eines variablen Spannungs- und Frequenzbetriebes ist. Dadurch werden weitere Kosten bei der Entwicklung einer neuen USV-Gerätereihe eingespart. Die Regelung des Batteriebetriebes ist nun in die Batterieankoppelvorrichtung verlagert.

Bei einer vorteilhaften Ausführungsform der unterbrechungsfreien Stromversorgungseinrichtung wird anstelle des speziellen Transformators mit nachgeschalteten Filterkondensatoren ein Sinusfilter verwendet. Dadurch kann anstelle dieses Spezialtransformators mit großer Streuinduktivität ein im Handel erhältlicher Transformator mit kleiner Streuinduktivität verwendet werden. Dadurch verringern sich die Kosten der unterbrechungsfreien Stromversorgungseinrichtung. Außerdem benötigt der handelsübliche Transformator gegenüber dem Spezialtransformator einen geringeren Einbauplatz.

Weitere vorteilhafte Ausgestaltungen der unterbrechungsfreien Stromversorgungseinrichtung sind den Unteransprüchen 4 bis 9 zu entnehmen.

Zur weiteren Erläuterung der Erfindung wird auf die Zeichnung Bezug genommen, in der eine vorteilhafte Ausführungsform einer erfindungsgemäßen unterbrechungsfreien Stromversorgungseinrichtung schematisch veranschaulicht ist.
- Figur 1: zeigt einen vereinfachten Übersichtsschaltplan einer im Handel erhältlichen USV-Einrichtung und die
- Figur 2: zeigt einen Übersichtsschaltplan einer vorteilhaften Ausführungsform einer erfindungsgemäßen USV-Einrichtung.

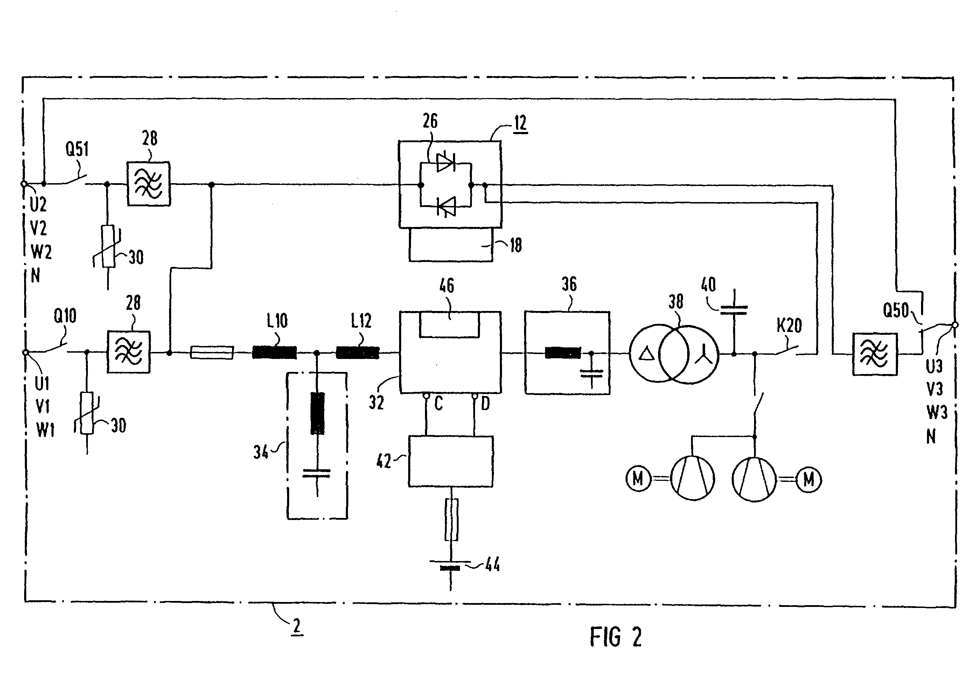

In der Figur 2 ist ein vereinfachter Übersichtsschaltplan einer vorteilhaften Ausführungsform einer erfindungsgemäßen unterbrechungsfreien Stromversorgungseinrichtung 2 dargestellt, wobei gleiche Bauelemente wie in Figur 1 dieselben Bezugszeichen tragen. Bei dieser Darstellung sind die EMV-Filter 28 und die als Überspannungsschutz verwendeten Varistoren 30 dargestellt. Um Wiederholungen zu vermeiden, werden bei dieser Figurenbeschreibung nur die Unterschiede zum Übersichtsschaltplan einer bekannten USV-Einrichtung 2 gemäß Figur 1 beschrieben.

Anstelle des Spannungszwischenkreis-Umrichters 4 gemäß Figur 1 wird in der Darstellung der Figur 2 ein handelsübliches Frequenzumrichter-Gerät 32 der Antriebstechnik verwendet. Eingangsseitig ist dieser Frequenzumrichter 32 mit einer Drossel L12 und mit einem Eingangsfilter 34 versehen. Ausgangsseitig ist dieser Frequenzumrichter 32 mit einem Sinusfilter 36 versehen. Der Sinusfilter 36 ist ausgangsseitig mit einem Transformator 38, dem ein Kompensations-Kondensator 40 nachgeschaltet ist, versehen. An den Gleichspannungsschienen-Anschlüssen C und D des Frequenzumrichter-Gerätes 32 ist eine Batterieankoppelvorrichtung 42 angeschlossen, die ausgangsseitig mit einer Batterie 44 verknüpft ist. Der Aufbau und die Funktionsweise dieser Batterieankoppelvorrichtung 42 ist in einer parallel eingereichten deutschen Patentanmeldung ausführlich dargestellt und beschrieben.

Wie eingangs schon beschrieben, weist dieser Frequenzumrichter 32 der Antriebstechnik einen Dioden-Gleichrichter in B6-Schaltung, einen Zwischenkreiskondensator und einen Wechselrichter auf, wobei die Stromrichterventile des Wechselrichters abschaltbare, feldgesteuerte Halbleiterbauelemente, insbesondere Insulated Gate Bipolar Transistors (IGBT), vorgesehen sind. Dieses Frequenzumrichter-Gerät 32 weist ebenfalls eine Steuer- und Regeleinrichtung 46 auf, die dementsprechend im Block des Frequenzumrichters 32 eingetragen ist.

Zur Entlastung des Umrichters 32 vor Verschiebungsblindstrom durch induktive Lastanteile und durch den Magnetisierungsstrom des Ausgangstransformators 38 sind auf der Lastseite Kompensation-Kondensatoren 40 eingesetzt. Damit der resultierende Umrichterstrom bei rein ohmscher USV-Last in etwa die Große wie bei ohmsch-induktiver Last hat, wird der Kompensations-Kondensator 40 für etwa 30% des Filterquerstromes bei Netzfrequenz gewählt. Im Sinusfilter 36 befindet sich ein Kondensator mit einer Größe von ca. 10% des Kompensations-Kondensators 40. Unter Berücksichtigung des Transformator-Übersetzungsverhältnisses werden dadurch eventuelle Minustoleranzen ausgeglichen.

Der Sinusfilter 36 ist als Optionskomponente des Frequenzumrichters 32 der Antriebstechnik verfügbar. Es wird in der jeweiligen Leistungsgröße des Umrichter-Geräts 32 eingesetzt. Es erzeugt aus den rechteckförmigen Umrichterspannungspulsen eine nahezu sinusförmige Spannung. Es besteht aus passiven LC-Filterkreisen.

Da der Transformator 38 nicht mehr neben der Spannungsumsetzung auch noch beim Ausgangsfilter mitwirken muß, kann ein Transformator 38 mit kleiner Streuinduktivität verwendet werden. Ein derartiger Transformator 38 ist für ein vorbestimmtes Übersetzungsverhältnis und eine vorbestimmte Bauleistung im Handel erhältlich. Ein handelsüblicher Transformator 38 ist gegenüber einem Spezialtransformator T20 gemaß Figur 1 mit großer Streuinduktivität preiswerter und weist eine kleinere Baugröße auf, was sich vorteilhaft auf die Baugröße der USV-Einrichtung 2 auswirkt.

Somit kann man mit handelsüblichen Bauelementen der Antriebstechnik (Frequenzumrichter 32, Batterieankoppelvorrichtung 42, Eingangsfilter 34, Sinusfilter 36 und Transformator 38) und mit USV-spezifischen Bauelementen (Netzrückschalteinrichtung 12, Handumgehungsschalter Q50) eine unterbrechungsfreie Stromversorgungseinrichtung 2 aufbauen, die die technischen und wirtschaftlichen Synergien der Antriebstechnik nutzt. Dadurch verringern sich die Entwicklungszeit und -kosten erheblich, wodurch sich die Baugröße und der Preis der USV-Einrichtung 2 verringert. Die USV-spezifischen Eigenschaften werden durch Modifizierung der Elektronik des Frequenzumrichter-Gerätes 32 erzielt.

## Patentansprüche

1. Unterbrechungsfreie Stromversorgungseinrichtung (2), die eine mit einem ersten Netz (U1,V1,W1,N1) verbundene Netzkommutierungsdrossel (L10), einen dieser Netzkommutierungsdrossel (L10) nachgeschalteten Spannungszwischenkreis-Umrichter (4) mit zugehöriger Steuereinrichtung (16) und mit einem Ausgangsfilter (14), bestehend aus einem Transformator (T20,38) mit Filterkondensatoren (C30,40), eine Netzrückschalteinrichtung (12) mit zugehöriger Steuereinrichtung (18), die mit einem weiteren Netz (U2,V2,N2,N) verbunden ist, einen Handumgehungsschalter (Q50) zur Umschaltung des weiteren Netzes (U2,V2,W2,N) auf einen Verbraucher (U3,V3,W3,N) und eine Batterie (44) aufweist, die mit Gleichspannungsschienen-Anschlüssen (C,D) des Umrichters (4) elektrisch leitend verbunden sind,
**dadurch gekennzeichnet,**
daß als Umrichter (4) ein Frequenzumrichter-Modul (32) der Antriebstechnik vorgesehen ist,
daß dem Wechselspannungseingang des Frequenzumrichter-Moduls (32) ein Eingangsfilter (34) vorgeschaltet ist,
daß zwischen den Gleichspannungsschienen-Anschlüssen (C,D) des Frequenzumrichter-Moduls (32) und der Batterie (44) eine spannungsglättende Batterieankoppelvorrichtung (42) elektrisch angeschlossen ist, welche die Regelung des Batteriebetriebs vornimmt, und
daß der Wechselspannungsausgang des Frequenzumrichter-Moduls (32) mit dem Ausgangsfilter (14) elektrich verbunden ist.

2. Unterbrechungsfreie Stromversorgungseinrichtung (2) nach Anspruch 1, wobei als Ausgangsfilter (14) ein Sinusfilter (36) mit nachgeschaltetem Transformator (38) mit kleiner Streuinduktivität vorgesehen ist.

3. Unterbrechungsfreie Stromversorgungseinrichtung (2) nach Anspruch 2, wobei dem Transformator (38) ein Kompensations-Kondensator (40) nachgeschaltet ist.

4. Unterbrechungsfreie Stromversorgungseinrichtung (2) nach Anspruch 1, wobei jeweils einem am ersten und weiteren Netz (U1,V1,W1;U2,V2,W2) vorgesehenen Eingangsschalter (Q10,Q51) ein Überspannungsschutz nachgeschaltet ist.

5. Unterbrechungsfreie Stromversorgungseinrichtung (2) nach Anspruch 1, wobei ein- und ausgangsseitig jeweils ein EMV-Filter (28) vorgesehen ist.

6. Unterbrechungsfreie Stromversorgungseinrichtung (2) nach Anspruch 4, wobei als Überspannungsschutz ein Varistor (30) vorgesehen ist.

7. Unterbrechungsfreie Stromversorgungseinrichtung (2) nach Anspruch 1, wobei dem Frequenzumrichter-Modul (32) eine der Netzkommutierungsdrossel nachgeschaltete, weitere Drossel (L12) vorgeschaltet ist.

8. Unterbrechungsfreie Stromversorgungseinrichtung (2) nach Anspruch 1, wobei das Eingangsfilter (34) und das Sinusfilter (36) Systemkomponenten des Frequenzumrichter-Moduls (32) der Antriebstechnik sind.

9. Unterbrechungsfreie Stromversorgungseinrichtung (2) nach Anspruch 5, wobei die EMV-Filter (28) Systemkomponenten des Frequenzumrichter-Moduls (32) der Antriebstechnik sind.

## Claims

1. Uninterruptable power supply device (2) which has a mains commutation inductor (L10) which is connected to a first mains system (U1, V1, W1, N1), has a voltage intermediate circuit converter (4) which is connected downstream of said mains commutation inductor (L10) and has an associated control device (16) and an output filter (14) comprising a transformer (T20, 38) with filter capacitors (C30, 40), said power supply device (2) also having a mains reset device (12) with an associated control device (18) which is connected to a further mains system (U2, V2, N2, N), having a manual bypass switch (Q50) for connecting the further mains system (U2, V2, W2, N) to a load (U3, V3, W3, N) and having a battery (44), which are electrically conductively connected to DC busbar connections (C, D) of the converter (4)
characterized
in that a frequency converter module (32) using drive technology is provided as the converter (4),
in that an input filter (34) is connected upstream of the AC voltage input of the frequency converter module (32),
in that a voltage-smoothing battery coupling apparatus (42) is electrically connected between the DC voltage busbar connections (C, D) of the frequency converter module (32) and the battery (44) and controls the battery operation, and
in that the AC voltage output of the frequency converter module (32) is electrically connected to the output filter (14).

2. Uninterruptable power supply device (2) according to Claim 1, a harmonic filter (36) having a downstream transformer (38) with low leakage inductance being provided as the output filter (14).

3. Uninterruptable power supply device (2) according to Claim 2, a compensation capacitor (40) being connected downstream of the transformer (38).

4. Uninterruptable power supply device (2) according to Claim 1, overvoltage protection being connected downstream of in each case one input switch (Q10, Q51) which is provided on the first and on the further mains system (U1, V1, W1; U2, V2, W2).

5. Uninterruptable power supply device (2) according to Claim 1, an EMC filter (28) being provided in each case on the input side and output side.

6. Uninterruptable power supply device (2) according to Claim 4, a varistor (30) being provided as overvoltage protection.

7. Uninterruptable power supply device (2) according to Claim 1, a further inductor (L12) which is connected downstream of the mains commutation inductor, being connected upstream of the frequency converter module (32).

8. Uninterruptable power supply device (2) according to Claim 1, the input filter (34) and the harmonic filter (36) being system components of the frequency converter module (32) using drive technology.

9. Uninterruptable power supply device (2) according to Claim 5, the EMC filters (28) being system components of the frequency converter module (32) using drive technology.

## Revendications

1. Dispositif d'alimentation électrique sans interruption (2), qui comporte une bobine de commutation de réseau (L10) reliée à un premier réseau (U1, V1, W1, N1), un convertisseur à circuit intermédiaire de tension (4) branché du côté aval de cette bobine de commutation de réseau (L10) et ayant un dispositif de commande (16) associé et un filtre de sortie (14) constitué d'un transformateur (T20, 38) avec des condensateurs de filtrage (C30, 40), un dispositif de recommutation de réseau (12) ayant un dispositif de commande associé (18) et relié à un autre réseau (U2, V2, W2, N), un commutateur de dérivation manuel (Q50) pour la commutation de l'autre réseau (U2, V2, W2, N) sur un consommateur (U3, V3, W3, N) et une batterie (44) qui est reliée de façon électriquement conductrice à des bornes de barres de tension continue (C, D) du convertisseur (4),
caractérisé par le fait que
il est prévu comme convertisseur (4) un module convertisseur de fréquence (32) de la technique d'entraînement,
un filtre d'entrée (34) est branché du côté amont de l'entrée de tension alternative du module convertisseur de fréquence (32),
il est raccordé électriquement entre les bornes de barres de tension continue (C, D) du module convertisseur de fréquence (32) et la batterie (44) un dispositif de couplage de batterie (42), qui lisse la tension et qui prend en charge la régulation du fonctionnement de batterie, et que
la sortie de tension alternative du module convertisseur de fréquence (32) est reliée électriquement au filtre de sortie (14).

2. Dispositif d'alimentation électrique sans interruption (2) selon la revendication 1, dans lequel il est prévu comme filtre de sortie (14) un filtre sinus (36) avec un transformateur (38) qui est branché du côté aval et qui a une petite inductance de fuite.

3. Dispositif d'alimentation électrique sans interruption (2) selon la revendication 2, dans lequel un condensateur de compensation (40) est branché du côté aval du transformateur (38).

4. Dispositif d'alimentation électrique sans interruption (2) selon la revendication 1, dans lequel une protection contre des surtensions est branchée du côté aval de chacun des interrupteurs d'entrée (Q10, Q51) prévus respectivement pour le premier réseau (U1, V1, W1) et pour l'autre réseau (U2, V2, W2).

5. Dispositif d'alimentation électrique sans interruption (2) selon la revendication 1, dans lequel il est prévu en entrée et en sortie à chaque fois un filtre CEM (28).

6. Dispositif d'alimentation électrique sans interruption (2) selon la revendication 4, dans lequel il est prévu un varistor (30) comme protection contre des surtensions.

7. Dispositif d'alimentation électrique sans interruption (2) selon la revendication 1, dans lequel une autre bobine (L12), branchée du côté aval de la bobine de commutation de réseau est branchée du côté amont du module convertisseur de fréquence (32).

8. Dispositif d'alimentation électrique sans interruption (2) selon la revendication 1, dans lequel le filtre d'entrée (34) et le filtre sinus (36) sont des composants de système du module convertisseur de fréquence (32) de la technique d'entraînement.

9. Dispositif d'alimentation électrique sans interruption (2) selon la revendication 5, dans lequel les filtres CEM (28) sont des composants de système du module convertisseur de fréquence (32) de la technique d'entraînement.
